# EUROPEAN PATENT APPLICATION

(11) **EP 3 225 512 A2**
(43) Date of publication of application: **04.10.2017**
(21) Application number: 15864233.0
(22) Date of filing: 24.11.2015
(51) Int. Cl.: B62D 25/08, B60K 11/04, B60R 19/24, B60R 19/34

(54) **STRUCTURE FOR FRONT OF VEHICLE BODY**

(30) Priority: 28.11.2014 JP 2014242274
(71) Applicant: Toyoda Iron Works Co., Ltd., Toyota-shi Aichi 471-8507 (JP)
(72) Inventor: NAKAYAMA, Takeshi, Toyota-shi Aichi 471-8507 (JP)
(74) Representative: Wills, Andrew Jonathan
(86) International application number: PCT/JP2015/082963
(87) International publication number: WO 2016/084814

(57) **Abstract**

A vehicle body front structure with reduced repair cost after a vehicle collision. The vehicle body front structure includes, between a crash box 18 and a front side member 12, a replaceable bracket 20 provided as a separate part from a radiator support 14 and detachably secured to the radiator support 14. The replaceable bracket 20 is secured to a vertical pillar 14a of the radiator support 14 such that the bracket is located laterally outward in the vehicle with respect to the vertical pillar 14a, and is secured to the front side member 12. Accordingly, in the event of a frontal collision, a front bumper reinforcement 16 is displaced laterally outward and rearward in the vehicle, whereby the crash box 18 is deformed, and the replaceable bracket 20 is deformed or fractured by the collision impact on the lateral part of the vehicle front. This minimizes damage to the radiator support 14. As a result, the replaceable bracket 20 need only be replaced in many cases.

## Description

### TECHNICAL FIELD

The present invention relates to vehicle body front structures, and more particularly to their improvements with reduced repair cost after a vehicle collision.

### BACKGROUND ART

A vehicle body front structure is known which includes front side members, a radiator support, a front bumper reinforcement, and shock absorbers attached to the front bumper reinforcement. Techniques have been proposed for reducing damage to the cooling system in the event of a vehicle collision for such a vehicle body front structure. In an example of these techniques, Patent Document 1 describes a support structure for a vehicle cooling system. In this technique, a radiator support is coupled to the vehicle body through a separate part from the radiator support so that in the event of a vehicle collision the separate part is deformed, thereby effectively minimizing damage to the cooling system.

### Related Art Documents

### Patent Documents

Patent Document 1: Japanese Patent Application Publication No. 2005-335668

### SUMMARY OF THE INVENTION

### Problem to be Solved by the Invention

In the conventional technique described above, however, when a collision impact is applied to a more lateral part of the vehicle front than the front side member in a vehicle collision, the entire radiator support need be replaced, even if it is a relatively minor collision (e.g. a small overlap crash). This may increase repair cost. The inventors have identified this problem through intensive studies for improving performance of vehicle body front structures.

The present invention has been developed in view of the above circumstances and aims to provide a vehicle body front structure with reduced repair cost after a vehicle collision.

### Means for Solving the Problem

In view of the above object, the invention provides, in a first aspect, a vehicle body front structure including a front side member, a radiator support, a front bumper reinforcement, and a shock absorber attached to the front bumper reinforcement, characterized by including: a replaceable bracket disposed between the shock absorber and the front side member, the replaceable bracket being a separate part from the radiator support and being detachably secured to the radiator support, wherein the replaceable bracket is secured to a vertical pillar of the radiator support such that the bracket is located laterally outward in the vehicle with respect to the vertical pillar, and is secured to the front side member.

### Effects of the Invention

In the first aspect of the invention, the vehicle body front structure includes the replaceable bracket disposed between the shock absorber and the front side member, the replaceable bracket being a separate part from the radiator support and being detachably secured to the radiator support, and the replaceable bracket is secured to the vertical pillar of the radiator support such that the bracket is located laterally outward in the vehicle with respect to the vertical pillar, and is secured to the front side member. Accordingly, in the event of a frontal collision, the front bumper reinforcement is displaced laterally outward and rearward in the vehicle, whereby the shock absorber is deformed, and the replaceable bracket is deformed or fractured by the collision impact on a lateral part of the vehicle front. This minimizes damage to the radiator support, and the replaceable bracket need only be replaced in many cases. Accordingly, a vehicle body front structure that reduces repair cost after a vehicle collision can be provided.

In a second aspect of the invention, which depends from the first aspect of the invention, the replaceable bracket is secured to the vertical pillar of the radiator support by a fastener. This minimizes damage to the radiator support in a practical manner, thus reducing repair cost after a vehicle collision.

In a third aspect of the invention, which depends from the first or second aspect of the invention, the replaceable bracket has a first portion secured to the vertical pillar of the radiator support, a second portion secured to the front side member, and a brittle portion between the first portion and the second portion. This allows the replaceable bracket to be more efficiently deformed or fractured by a collision impact on a lateral part of the vehicle front, thus more effectively minimizing damage to the radiator support.

In a fourth aspect of the invention, which depends from any one of the first to third aspects of the invention, the front side member includes a unitary width extender extending laterally outward in the vehicle, and the replaceable bracket is secured to a forward surface of the width extender. This minimizes damage to the radiator support with the practical configuration, thereby reducing repair cost after a vehicle collision.

### BRIEF DESCRIPTION OF THE DRAWINGS

FIG 1 is a schematic plan view schematically showing an example configuration of a vehicle body front structure according to a preferred embodiment of the present invention.
FIG 2 is a perspective view illustrating in detail a joint portion between a front side member and a radiator support in the vehicle body front structure of FIG 1.
FIG 3 is an illustration of effects of the vehicle body front structure of FIG 1.
FIG 4 is a diagram showing an example brittle portion that can be included in the replaceable bracket shown in FIG 1, in which a part of each flange is cut out.
FIG 5 is an illustration of effects of the brittle portion shown in FIG 4.
FIG 6 is a diagram showing an example brittle portion that can be included in the replaceable bracket in FIG 1, in which a plurality of holes are formed in the replaceable bracket.
FIG 7 is an illustration of effects of the brittle portion shown in FIG 6.
FIG 8 is a perspective view illustrating the configuration of another replaceable bracket that can be suitably used in the vehicle body front structure shown in FIG 1.
FIG 9 is an illustration of effects of the replaceable bracket of FIG 8.

### MODES FOR CARRYING OUT THE INVENTION

The replaceable bracket preferably comprises a relatively thin plate material shaped into an L-shape as viewed in plan. Preferably, the replaceable bracket may include a first planar segment and a second planar segment perpendicular to the first planar segment. Preferably, the replaceable bracket may have flanges at its upper and lower ends that project to the side of the bracket opposite from that on which the bracket is attached to the front side member and the radiator support.

Preferably, the first planar segment of the replaceable bracket may be secured to a vertical pillar in the radiator support. Preferably, the second planar segment of the replaceable bracket may be secured to the width extender on the front side member.

The radiator support may preferably comprise a main portion, including the vertical pillar, and the replaceable bracket separate from it at the boundary between the front side member and the width extender. The main portion is associated with the front side member, while the replaceable bracket associated with the width extender.

The brittle portion is preferably located between the first and second planar segments in the replaceable bracket. Preferably, the brittle portion may comprise a cutout in the flange between the first and second planar segments. Preferably, the brittle portion may comprise a plurality of holes extending through the thickness of the replaceable bracket at the boundary between the first and second planar segments.

Preferred embodiments of the present invention will be described in detail with reference to the accompanying drawings. Features are not always drawn to scale in the drawings.

### Embodiments

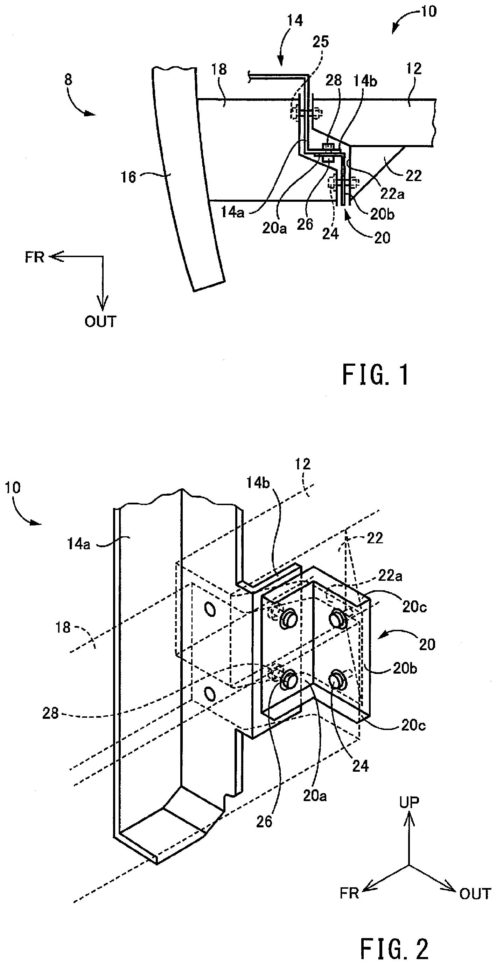

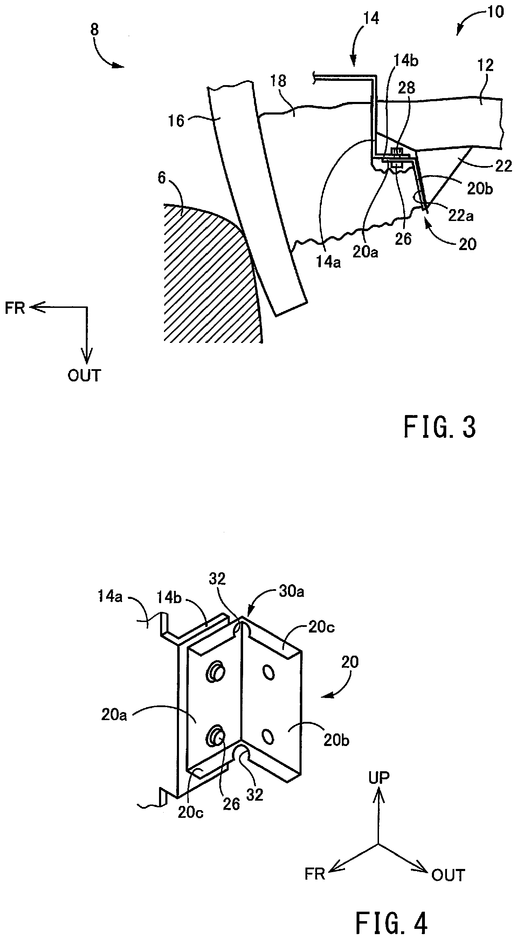

FIG 1 is a schematic plan view schematically showing an example of the configuration of a vehicle body front structure 10 according to a preferred embodiment of the present invention. In FIG 1, arrow FR represents the front side of a vehicle, and arrow OUT represents the lateral side (or left side) of the vehicle (the same applies to FIG 3). As shown in FIG 1, the vehicle body front structure 10 in the shown embodiment is provided on the front side of a vehicle 8, and includes a pair of left and right front side members 12 (only the left one is shown in FIG 1), a radiator support 14, and a front bumper reinforcement 16. A pair of left and right crash boxes 18 (only the left one is shown in FIG 1) are attached to the rear side of the front bumper reinforcement 16. In other words, the front bumper reinforcement 16 is secured at its ends to the crash boxes 18.

When subjected to an axial compression due to a shock from the front side of the vehicle, the crash box 18 is crushed, for example, into the form of a bellows. At this time, the crash box 18 is deformed to absorb shock energy, thereby reducing the shock on structural members of the vehicle such as the front side member 12. In this embodiment, the crash box 18 is thus an example of a shock absorber attached to the front bumper reinforcement 16.

FIG 2 is a perspective view illustrating in detail a joint portion between the front side member 12 and the radiator support 14 in the vehicle body front structure 10. The front side member 12 and the crash box 18 are shown by dashed lines in the figure. In FIG 2, arrow FR represents the front side of the vehicle, arrow OUT represents the lateral side (or left side) of the vehicle, and arrow UP represents the upper side of the vehicle (the same applies to FIGS. 4 to 9). As shown in FIG 2, the vehicle body front structure 10 includes a replaceable bracket 20. The front side member 12 and the radiator support 14 are coupled via the replaceable bracket 20. Specifically, the replaceable bracket 20 is disposed between the front side member 12 and the radiator support 14 and is secured to the front side member 12 and the radiator support 14. The replaceable bracket 20 thus serves as a coupling member that couples the front side member 12 and the radiator support 14. In other words, the replaceable bracket 20 serves as a support member that supports the radiator support 14 with respect to the front side member 12.

As shown in FIG 1, the replaceable bracket 20 is located between the front side member 12 and the crash box 18 as viewed in plan. In other words, the replaceable bracket 20 is located forward in the vehicle with respect to at least a part of the front side member 12, and rearward in the vehicle with respect to at least a part of the crash box 18. Therefore, the replaceable bracket 20 is arranged in the longitudinal direction of the vehicle between at least a part of the front side member 12 and at least a part of the crash box 18.

As shown in FIG 1, in the vehicle body front structure 10, the front side member 12, the radiator support 14, and the crash box 18 are fastened or coupled together with a fastener such as bolts 25. As described later, a width extending gusset 22 disposed on the front side member 12, the replaceable bracket 20 attached to the radiator support 14, and the crash box 18 are fastened or coupled together by a fastener such as bolts 24. Some features such as the bolts 25 are not shown in FIG 2.

As shown in FIGS. 1 and 2, the replaceable bracket 20 may comprise a relatively thin plate material shaped into an L shape as viewed in plan. Accordingly, the replaceable bracket 20 may include a first planar segment 20a and a second planar segment 20b perpendicular to the first planar segment 20a. The replaceable bracket 20 may preferably comprise a material that is thinner than at least the components of the radiator support 14 (e.g. the vertical pillar 14a). As shown in FIG 2, the replaceable bracket 20 preferably has flanges 20c at its upper and lower ends or edges such that each flange projects toward the side of the bracket 20 opposite from that on which the bracket 20 is attached to the front side member 12 and the radiator support 14. The flanges 20c are not shown in FIGS. 1 and 3. The flanges 20c may give necessary and sufficient strength or rigidity to the replaceable bracket 20, and need not necessarily be included. As shown in FIG 4, which will be discussed later, the replaceable bracket 20 may have strength reduced purposefully by cutting out a part of each flange 20c.

As shown in FIGS. 1 and 2, the front side member 12 may include a unitary width extending gusset 22 that forms a width extender extending laterally outward in the vehicle. In other words, the width extending gusset 22 is a part of the front side member 12 which projects laterally outward in the vehicle. As described later with reference to FIG 3, the width extending gusset 22 has a function to transmit the collision impact on a lateral part of the vehicle front, via the crash box 18, to the front side member 12. The width extending gusset 22 may preferably be triangular or dovetail shaped as viewed in plan, with a flat surface 22a parallel to the lateral direction of the vehicle. The replaceable bracket 20 is secured to the width extending gusset 22. The second planar segment 20b of the replaceable bracket 20 is preferably fastened to the forward facing flat surface 22a of the width extending gusset 22 with a fastener such as the bolts 24. Further, as shown in FIG 1, the width extending gusset 22, the replaceable bracket 20, and the crash box 18 are preferably fastened together by a fastener such as the bolts 24. With this configuration, the replaceable bracket 20 is detachably secured to the front side member 12.

As shown in FIG 2, the radiator support 14 has a unitary attachment portion 14b on the vehicle lateral side of the vertical pillar 14a in the radiator support 14 such that the attachment portion 14b extends parallel to the longitudinal direction of the vehicle. In other words, the attachment portion 14b is a part of the vertical pillar 14a which extends laterally outward and then rearward in the vehicle. The replaceable bracket 20 is secured to the attachment portion 14b. The first planar segment 20a of the replaceable bracket 20 may preferably be fastened to the attachment portion 14b with a fastener such as bolts 26 and nuts 28 such that the replaceable bracket 20 is located laterally outward in the vehicle with respect to the attachment portion 14b. That is, with this configuration, the replaceable bracket 20 is detachably secured to the vertical pillar 14a of the radiator support 14.

As described above, the vehicle body front structure 10 in embodiments includes the replaceable bracket 20 provided as a separate part from the radiator support 14 and detachably secured to the radiator support 14. In other words, a lateral outer part of the radiator support 14 is provided as the replaceable bracket 20 separate from the vertical pillar 14a (i.e., provided as a separate part). As shown in FIG 1, the radiator support 14 may preferably comprise the vertical pillar 14a and the replaceable bracket 20 separate from it at the boundary between the (body of the) front side member 12 and the width extending gusset 22, such that the vertical pillar 14a is associated with the (body of the) front side member 12 while the replaceable bracket 20 is associated with the width extending gusset 22.

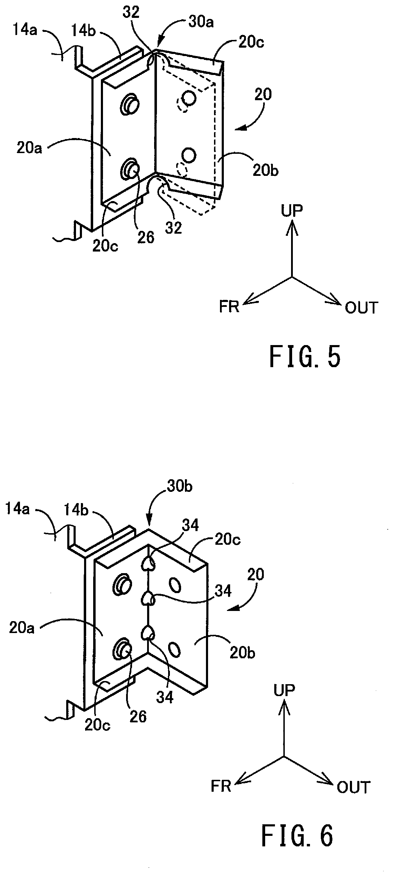

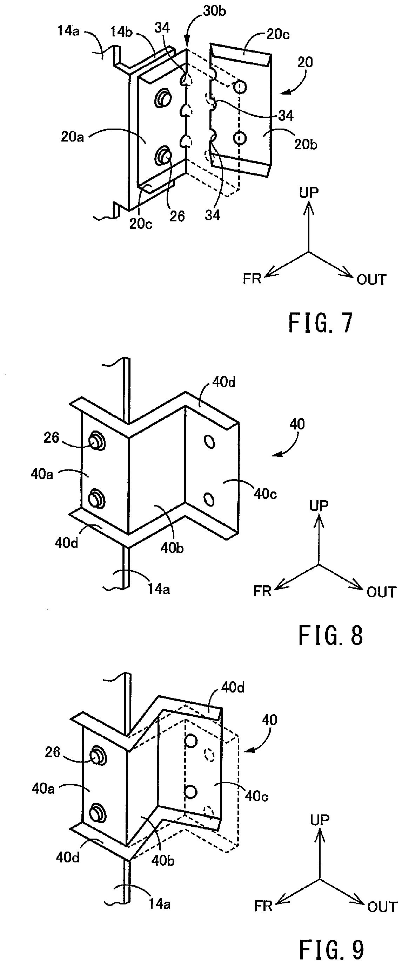

FIG 3 is a diagram illustrating effects of the vehicle body front structure 10 of the embodiment configured as described above. Some features such as the bolts 24, 25 are not shown in FIG 3. As shown in FIG 3, in the event of a frontal collision in which a lateral part (near the side end) of the front of the vehicle 8 collides with an object 6, the front bumper reinforcement 16 is displaced laterally outward and rearward in the vehicle, whereby the shock absorber crash box 18 is deformed. A collision impact on a lateral part of the vehicle front is transmitted from the width extending gusset 22 to the front side member 12. At this time, in the vehicle body front structure 10 of the present embodiment, the replaceable bracket 20 is deformed or fractured by this collision impact on the lateral part of the vehicle front. Specifically, as shown in FIG 5, which will be discussed later, the replaceable bracket 20 is deformed so that the first and second planar segments 20a, 20b are opened, namely, so as to form an obtuse angle therebetween. Alternatively, as shown in FIG 7, which will be discussed later, the replaceable bracket 20 is fractured (or broken) until the first and second planar segments 20a, 20b are separated. This deformation or fracture of the replaceable bracket 20 reduces transmission of the collision impact to the radiator support 14, thereby effectively minimizing deformation of, or damage to, the vertical pillar 14a or other components of the radiator support 14. That is, in the event of a frontal collision of the vehicle 8, the radiator support 14 can remain intact. As a result, the replaceable bracket 20 need only be replaced in many cases.

In order to enhance the above effects, the vehicle body front structure 10 in an embodiment may preferably include brittle portions 30a, 30b in the replaceable bracket 20 so as to facilitate deformation or fracture of the replaceable bracket 20 by the collision impact on the a lateral part of the vehicle front. FIG 4 shows the brittle portion 30a, and FIG 6 shows the brittle portion 30b. Hereinafter, the brittle portions 30a, 30b will be simply referred to as the brittle portions 30 unless they need to be distinguished. Preferably, the brittle portion 30 may be more brittle (i.e. less rigid) than the remaining portions of the replaceable bracket 20 and may be located between the first planar segment 20a, which is secured to the vertical pillar 14a of the radiator support 14, and the second planar segment 20b, which is secured to the width extending gusset 22 on the front side member 12. Specific examples of the brittle portion 30 of the replaceable bracket 20 will be described below with reference to FIGS. 4 to 7. Some features such as the front side member 12, the crash box 18, and the bolts 24 are not shown in FIGS. 4 to 7.

FIG 4 is a diagram showing an example of the brittle portion 30 of the replaceable bracket 20, in which a part of each flange 20c is cut out. FIG 5 is a diagram illustrating how the replaceable bracket 20 configured as shown in FIG 4 is deformed when a collision impact is applied to a lateral part of the vehicle front. The shape before deformation is shown in dashed lines, and the shape after deformation is shown in solid lines. In the configuration shown in FIG 4, the replaceable bracket 20 has the brittle portion 30a between the first and second planar segments 20a, 20b. Specifically, each flange 20c has a cutout 32 in its substantially middle part, namely between the first and second planar segments 20a, 20b. In other words, each flange 20c projects in a smaller width at the boundary between the first and second planar segments 20a, 20b than in the remaining portions of the flange 20c. Alternatively, each flange 20c may project in zero width in at least a part of the flange 20c. In this configuration, when a collision impact is applied to the lateral part of the vehicle front, the replaceable bracket 20 is more easily deformed so that the first and second planar segments 20a, 20b are opened (so as to form an obtuse angle therebetween) as shown in FIG 5 due to the brittle portion 30 (or cutouts 32). Namely, the brittle portion 30a of the replaceable bracket 20 facilitates deformation of the replaceable bracket 20 by a collision impact on the lateral part of the vehicle front.

FIG 6 is a diagram showing an example of the brittle portion 30 of the replaceable bracket 20, in which a plurality of holes are formed in the replaceable bracket 20. FIG 7 is a diagram illustrating how the replaceable bracket 20 configured as shown in FIG 6 is fractured by a collision impact on the lateral part of the vehicle front. The shape before fracture is shown by dashed lines, and the shape after fracture is shown by solid lines. In the configuration shown in FIG 6, the replaceable bracket 20 has the brittle portion 30b between the first and second planar segments 20a, 20b. Specifically, a plurality of (three in FIG 6) holes 34 extends through the thickness of the replaceable bracket 20 in a substantially middle part of the replaceable bracket 20, namely in a part of the replaceable bracket 20 at the boundary between the first and second planar segments 20a, 20b. The plurality of holes 34 may preferably be formed at substantially regular intervals in the corner (of the L shape as viewed in plan) at the boundary between the first and second planar segments 20a, 20b. Alternatively, a single hole 34 may be formed at the boundary between the first and second planar segments 20a, 20b. In this configuration, when a collision impact is applied to a lateral part of the vehicle front, the replaceable bracket 20 is more easily fractured such that the first and second planar segments 20a, 20b are separated at the boundary therebetween as shown in FIG 7 due to the brittle portion 30b (or holes 34). Namely, the brittle portion 30b of the replaceable bracket 20 facilitates fracture of the replaceable bracket 20 by a collision impact on the lateral part of the vehicle front.

FIG 8 is a perspective view illustrating the configuration of an alternative replaceable bracket 40 that can be suitably used in the vehicle body front structure 10 in embodiments. The replaceable bracket 40 is made from a relatively thin plate material in a similar manner to the replaceable bracket 20, and includes a first planar segment 40a, a second planar segment 40b, and a third planar segment 40c. The second planar segment 40b is perpendicular to the first and third planar segments 40a, 40c. The first and third planar segments 40a, 40c are parallel to each other. The first planar segment 40a extends laterally inward in the vehicle from the second planar segment 40b, while the third planar segment 40c extends laterally outward in the vehicle from the second planar segment 40b. The replaceable bracket 40 has flanges 40d at its upper and lower ends such that each flange extends forward and laterally outward in the vehicle.

The replaceable bracket 40 is attached to the vertical pillar 14a of the radiator support 14 on the front side of the vertical pillar 14a. Specifically, as shown in FIG 8, the first planar segment 40a is fastened to a forward surface of the vertical pillar 14a with a fastener such as the bolts 26 and nuts 28. The third planar segment 40c is fastened to a forward surface of the width extending gusset 22 on the front side member 12 with a fastener such as the bolts 24. In the configuration shown in FIG 8, the vertical pillar 14a need not have an attachment portion 14b. Although the replaceable bracket 40 is fastened to the vertical pillar 14a on the front side of the vertical pillar 14a, the part of the replaceable bracket 40 which is effective against a collision impact on the lateral part of the vehicle front is situated laterally outward in the vehicle with respect to the vertical pillar 14a. That is, the replaceable bracket 40 is secured to the vertical pillar 14a with its main part located laterally outward in the vehicle with respect to the vertical pillar 14a.

The vehicle body front structure 10 including the replaceable bracket 40 also provides the effects described above against a collision impact on the lateral part of the vehicle front. As shown in FIG 9, when a collision impact is applied to the lateral part of the vehicle front, the replaceable bracket 40 is deformed such that the first and second planar segments 40a, 40b are more closed, namely such that the first and second planar segments 40a, 40b form an acute angle therebetween. Alternatively, the replaceable bracket 40 is fractured or broken such that the first and second planar segments 40a, 40b are separated. This deformation or fracture of the replaceable bracket 40 reduces transmission of the collision impact to the radiator support 14, thereby effectively minimizing deformation of, or damage to, the vertical pillar 14a or other components of the radiator support 14. In order to enhance these effects, a brittle portion 30 may preferably be included into the replaceable bracket 40. For example, each flange 40d may have a cutout 32 between the first and second planar segments 40a, 40b of the bracket 40. Alternatively, a plurality of holes 34 may extend through the thickness of the replaceable bracket 40 in a part of the replaceable bracket 40, at the boundary between the first and second planar segments 40a, 40b. Alternatively, a plurality of holes 34 may extend through the thickness of the replaceable bracket 40 in a part of the replaceable bracket 40, at the boundary between the second planar segment 40b and the third planar segment 40c.

In the embodiments described above, the replaceable bracket 20 is disposed between the shock absorber crash box 18 and the front side member 12. The replaceable bracket 20 is a separate part from the radiator support 14 and is detachably secured to the radiator support 14. The replaceable bracket 20 is secured to the vertical pillar 14a of the radiator support 14 such that the bracket is located laterally outward in the vehicle with respect to the vertical pillar 14a, and is secured to the front side member 12. Accordingly, in the event of a frontal collision, the front bumper reinforcement 16 is displaced laterally outward and rearward in the vehicle, whereby the crash box 18 is deformed, and the replaceable bracket 20 is deformed or fractured by the collision impact on the lateral part of the vehicle front. This minimizes damage to the radiator support 14. As a result, the replaceable bracket 20 need only be replaced in many cases. Accordingly, the vehicle body front structure 10 that reduces repair cost after a vehicle collision can be provided.

The replaceable bracket 20 is secured to the vertical pillar 14a of the radiator support 14 by a fastener such as the bolts 26 and nuts 28. This minimizes damage to the radiator support 14 with the practical configuration, thus reducing repair cost after a vehicle collision.

The replaceable bracket 20 has the brittle portion 30 between that portion of the replaceable bracket 20 which is secured to the vertical pillar 14a of the radiator support 14 and that portion of the replaceable bracket 20 which is secured to the front side member 12. This allows the replaceable bracket 20 to be more efficiently deformed or fractured by a collision impact on the lateral part of the vehicle front, thus more effectively reducing damage to the radiator support 14.

The front side member 12 includes the unitary width extending gusset 22 serving as the width extender extending laterally outward in the vehicle, and the replaceable bracket 20 is secured to the forward surface of the width extending gusset 22. This minimizes damage to the radiator support 14 with the practical configuration, thus reducing repair cost after a vehicle collision.

While preferred embodiments of the present invention have been described in detail above with reference to the drawings, the present invention is not limited to those embodiments and can be embodied in various modified forms without departing from the spirit and scope of the invention.

### List of the Reference Numerals

10: Vehicle body front structure, 12: Front side member, 14: Radiator support, 14a: Vertical pillar, 16: Front bumper reinforcement, 18: Crash box (Shock absorber), 20, 40: Replaceable bracket, 22: Width extending gusset (Width extender), 26: Bolt (Fastener), 28: Nut (Fastener), 30: Brittle portion

## Claims

1. A vehicle body front structure comprising a front side member, a radiator support, a front bumper reinforcement, and a shock absorber attached to the front bumper reinforcement, **characterized by** further comprising:
a replaceable bracket disposed between the shock absorber and the front side member, the replaceable bracket being a separate part from the radiator support and being detachably secured to the radiator support, wherein
the replaceable bracket is secured to a vertical pillar of the radiator support such that the bracket is located laterally outward in the vehicle with respect to the vertical pillar, and is secured to the front side member.

2. The vehicle body front structure according to claim 1, wherein
the replaceable bracket is secured to the vertical pillar of the radiator support by a fastener.

3. The vehicle body front structure according to claim 1 or 2, wherein
the replaceable bracket comprises a first portion secured to the vertical pillar of the radiator support, a second portion_secured to the front side member, and a brittle portion between the first portion and the second portion of the replaceable bracket.

4. The vehicle body front structure according to any one of claims 1 to 3, wherein
the front side member includes a unitary width extender extending laterally outward in the vehicle, and
the replaceable bracket is secured to a forward surface of the width extended.
